# EUROPEAN PATENT APPLICATION

(11) **EP 4 415 096 A1**
(43) Date of publication of application: **14.08.2024**
(21) Application number: 24154405.5
(22) Date of filing: 29.01.2024
(51) Int. Cl.: H01M 10/0562, H01M 4/139, C09D 11/322, C09D 11/36, C09D 11/38, H01M 10/0525

(54) **LIQUID COMPOSITION, METHOD FOR PRODUCING SOLID-ELECTROLYTE-CONTAINING LAYER, AND METHOD FOR PRODUCING ELECTROCHEMICAL ELEMENT**

(30) Priority: 08.02.2023 JP 2023017333; 14.12.2023 JP 2023211117
(71) Applicant: Ricoh Company, Ltd., Tokyo 143-8555 (JP)
(72) Inventor: NOGUCHI, Soh, Tokyo, 143-8555 (JP); HIGASHI, Ryuji, Tokyo, 143-8555 (JP); IMANAGA, Yukihiro, Tokyo, 143-8555 (JP); UTSUKI, Aya, Tokyo, 143-8555 (JP); OHYA, Kayato, Tokyo, 143-8555 (JP); SAGISAKA, Toshiya, Tokyo, 143-8555 (JP); TAKEUCHI, Shigeo, Tokyo, 143-8555 (JP); SONE, Yuji, Tokyo, 143-8555 (JP); LI, Muxin, Tokyo, 143-8555 (JP)
(74) Representative: Marks & Clerk LLP

(57) **Abstract**

A liquid composition includes a solid electrolyte and a dispersion medium. The dispersion medium is a ring-containing hydrocarbon or phenyl ether, each having 9 or more atoms other than hydrogen atom.

## Description

### BACKGROUND

### Technical Field

The present disclosure relates to a liquid composition, a method for producing a solid-electrolyte-containing layer, and a method for producing an electrochemical element.

### Related Art

Electrochemical elements, for example, secondary batteries such as a lithium-ion secondary battery are installed in portable devices, hybrid vehicles, electric vehicles, and the like, and, as such, demand for the electrochemical elements is increasing. Further, there is a growing need for thin batteries installed in various wearable devices and medical patches, and requirements for the secondary batteries are more diversified. Of these, all-solid-state batteries that use solid electrolytes have advantages, such as high safety, rapid charging, and high energy density, and thus all-solid-state batteries are expected to be put into practical use.

For example, there has been proposed a particulate solid electrolyte including solid electrolyte particles, in which the solid electrolyte particles include at least S and Li, the average particle diameter of the solid electrolyte particles is 1.5 µm or less, and the particle diameter of 90% or more of the solid electrolyte particles is 2.5 µm or less (e.g., see Japanese Unexamined Patent Application Publication No. 2009-211950).

Further, there have been proposed solid electrolyte fine particles including at least sulfur element and lithium element, in which a volume-based average particle diameter of 0.5 µm or less, and a volume-based particle diameter of 90% or more of particles is 1.5 µm or less, as measured by a laser diffraction particle size distribution measurement method (e.g., see Japanese Unexamined Patent Application Publication No. 2012-134133).

On the other hand, in recent years, from the viewpoint of reducing material costs and environmental impact, a production method in which a liquid composition for an electrode composite layer is applied using inkjet printing that enables easy intermittent coating has been drawing attention. However, the inkjet printing is a production method generally used for applying a low viscosity liquid composition, and even for an inkjet head that is advertised as a high-viscosity type, the required upper limit of the viscosity of the liquid composition is 200 mPa s, which is 10 to 100 times lower than the viscosity of a conventional slurry-like liquid composition for an electrode composite layer. Further, a dispersion medium is limited in a boiling point range due to a drying step during the film formation process and a discharge process from the inkjet head.

### SUMMARY

An object of the present invention is to provide a liquid composition demonstrating excellent discharge performance in an inkjet method.

A liquid composition according to an embodiment of the present invention as a means for solving the above-mentioned problems includes a solid electrolyte and a dispersion medium. The dispersion medium comprises a ring-containing hydrocarbon or phenyl ether, each having 9 or more atoms other than hydrogen atom.

According to embodiments of the present invention, a liquid composition is provided that demonstrates excellent discharge performance in an inkjet method.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a schematic diagram illustrating a method for producing a solid-electrolyte-containing layer according to an embodiment of the present invention;
FIG. 2 is a schematic diagram illustrating an apparatus for producing a solid-electrolyte-containing layer according to an embodiment of the present invention;
FIG. 3 is a schematic diagram illustrating an apparatus for producing a solid-electrolyte-containing layer according to an embodiment of the present invention;
FIG. 4 is a schematic diagram illustrating a method for producing an electrode according to an embodiment of the present invention;
FIG. 5 is a schematic diagram illustrating a modification of a liquid discharge device;
FIG. 6 is a schematic diagram illustrating a method for producing an electrode according to an embodiment of the present invention;
FIG. 7 is a schematic diagram illustrating a modification of a liquid discharge device;
FIG. 8 is a cross-sectional view of a negative electrode according to an embodiment of the present invention;
FIG. 9 is a cross-sectional view of a positive electrode according to an embodiment of the present invention;
FIG. 10 is a cross-sectional view of a laminated body, including a solid-electrolyte-containing layer and an electrode, according to an embodiment of the present invention;
FIG. 11 is a cross-sectional view of an electrode according to an embodiment of the present invention;
FIG. 12 is a cross-sectional view of an electrode element used in an electrochemical element according to an embodiment of the present invention;
FIG. 13 is a cross-sectional view of an electrochemical element according to an embodiment of the present invention; and
FIG. 14 is a schematic diagram illustrating a mobile object including an all-solid-state battery that is an example of an electrochemical element according to an embodiment of the present invention.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

### (Liquid composition)

A liquid composition according to an embodiment of the present invention includes at least a solid electrolyte and a dispersion medium, and further optionally includes other components.

The liquid composition of the present embodiment can be used, for example, for forming a solid electrolyte layer of a secondary battery, or the like. Further, the liquid composition for forming the solid electrolyte layer of the secondary battery can be used, for example, for forming a solid electrolyte layer of a non-aqueous secondary battery such as a lithium-ion secondary battery.

### <Solid electrolyte>

The solid electrolyte is not particularly limited as long as the solid electrolyte has electronic insulating properties and exhibits ionic conductivity, and the solid electrolyte can be appropriately selected depending on the purpose.

In the present specification, the term "having electronic insulation properties" means that a positive electrode and a negative electrode are facing each other through a solid electrolyte layer without being short-circuited, and the term "exhibiting ionic conductivity" means that, when a potential difference is applied to a positive electrode and a negative electrode facing each other through a solid electrolyte layer, ions can move between the electrodes.

Specific examples of the solid electrolyte include, but are not limited to, compounds such as LiₓₐLa_{ya}TiO₃ [xa=0.3 to 0.7, ya=0.3 to 0.7] (LLT), Li_{xb}La_{yb}Zr_{zb}Mbb_{mb}O_{nb} (Mbb is at least one or more elements of Al, Mg, Ca, Sr, V, Nb, Ta, Ti, Ge, In, or Sn, xb satisfies 5≤xb≤10, yb satisfies 1≤yb≤4, zb satisfies 1≤zb≤4, mb satisfies 0≤mb≤2, and nb satisfies 5≤nb≤20), Li_{xc}B_{yc}Mcc_{zc}O_{nc} (Mcc is at least one or more elements of C, S, Al, Si, Ga, Ge, In, or Sn, xc satisfies 0≤xc≤5, yc satisfies 0≤yc≤1, zc satisfies 0≤zc≤1, and nc satisfies 0≤nc≤6), Li_{xd}(Al,Ga)_{yd}(Ti,Ge)_{zd}Si_{ad}P_{md}O_{nd} (where 1≤xd≤3, 0≤yd≤1, 0≤zd≤2, 0≤ad≤1, 1≤md≤7, and 3≤nd≤13), Li₍₃₋₂ₓₑ₎MeeₓₑDeeO (xe represents the number of 0 or more to 0.1 or less and Mee represents a divalent metal atom. Dee represents a halogen atom or a combination of two or more halogen atoms), Li_{xf}Si_{yf}O_{zf} (1≤xf≤5, 0<yg≤3, and 1≤zg≤10), Li_{xg}S_{yg}O_{zg} (1≤xg≤3, 0<yg≤2, and 1≤zg≤10), Li₃BO₃-Li₂SO₄, Li₂O-B₂O₃-P₂O₅, Li₂O-SiO₂, Li₆BaLa₂Ta₂O₁₂, Li₃PO_{(4-3/2w)}N_{w} (w<1), Li_{3.5}Zn_{0.25}GeO₄ with a lithium super ionic conductor (LISICON) type crystal structure, La_{0.55}Li_{0.35}TiO₃ with a perovskite type crystal structure, LiTi₂P₃O₁₂ with a natrium super ionic conductor (NASICON) type crystal structure, Li_{1+xh+yh}(Al,Ga)ₓₕ(Ti,Ge)_{2-xb}Si_{yh}P_{3-yh}O₁₂ (where 0≤xh≤1 and 0≤yh≤1), and Li₇La₃Zr₂O₁₂ (LLZ) with a garnet-type crystal structure.

Further, desirable is a phosphorus compound containing Li, P and O. Examples of such a phosphorus compound include lithium phosphate (Li₃PO₄), LiPON in which some of oxygen in lithium phosphate is replaced with nitrogen, LiPOD 1 (D 1 is at least one selected from Ti, V, Cr, Mn, Fe, Co, Ni, Cu, Zr, Nb, Mo, Ru, Ag, Ta, W, Pt, Au, or the like).

Further, LiAlON (A1 is at least one selected from Si, B, Ge, Al, C, Ga, or the like) can also be preferably used.

Further, a sulfide solid electrolyte is also preferable from the viewpoint of having high ionic conductivity. The sulfide solid electrolyte is more preferable as the sulfide solid electrolyte has high plasticity that allows formation of good interface between solid electrolyte particles or between a solid electrolyte and an active material.

The sulfide solid electrolytes can be broadly classified into, for example, crystalline sulfide solid electrolytes and glass-based solid electrolytes. Examples of the crystalline sulfide solid electrolytes include Li_{9.54}Si_{1.74}P_{1.44}S_{11.7}Cl_{0.3}, Li_{9.6}P₃Si₂, Li₉P₃S₉O₃, Li_{9.81}Sn_{0.81}P_{2.19}S₁₂, Li_{9.42}Si_{1.02}P_{2.1}S_{9.96}O_{2.04}, Li₁₀Ge (P₁₋ₓSbₓ)₂S₁₂ (0≤x≤0.15), Li₁₀SnP₂S₁₂, Li_{10.35}[M1₁₋ₓM2ₓ]_{1.35}P_{1.65}S₁₂ (M1, M2 is any of Si, Ge, Sn, As, or Sb, 0≤x≤0.15), Li₁₁Si₂PS₁₂, Li₁₁AlP₂S₁₂, Li_{3.45}Si_{0.45}P_{0.55}S₄, Li₆PS₅X (X = Cl, Br, I), Li₅PS₄X₂ (X = Cl, Br, I), Li_{5.5}PS_{4.5}Cl_{1.5}, Li_{5.35}Ca_{0.1}PS_{4.5}Cl_{1.55}, Li₆₊ₓMₓSb₁₋ₓS₅I (M=Si, Ge, Sn, 0≤x≤1), Li₇P₂S₈I, γ-Li₃PS₄, Li₄MS₄ (M=Ge, Sn, As), Li₄₋ₓSn₁₋ₓSbₓS₄ (0≤x≤0.15), Li₄₋ₓGe₁₋ₓPₓS₄ (0≤x≤0.15), and Li₃₊₅ₓP₁₋ₓS₄ (0≤x≤0.3).

Examples of the glass-based sulfide solid electrolytes include Li₂S-P₂S₅, Li₂S-P₂S₅-LiI, Li₂S-P₂S₅-P₂O₅, Li₂S-P₂S₅-LiCl, Li₂S-SiS₂, Li₂S-SiS₂-P₂S₅, Li₂S-SiS₂-Al₂S₃, and Li₂S-SiS₂-LiₓMO_{y} (M=Si, P, Ge). Further, a Li₇P₃S₁₁ glass ceramic or the like, in which a part of the glass-based sulfide solid electrolyte is crystallized, can also be used. Note that a mixing ratio of each raw material of the glass-based sulfide solid electrolyte may be freely set.

The maximum particle diameter of the solid electrolyte used in the liquid composition of the present embodiment is not particularly limited as long as the effects of the present invention are not impaired, and the maximum particle diameter can be appropriately selected depending on the purpose. However, for an application in the inkjet printing, the maximum particle diameter is preferably smaller than the nozzle diameter of the inkjet head. The maximum particle diameter is preferably sufficiently smaller than the nozzle diameter of the inkjet head in terms of further improving inkjet discharge performance. Specifically, a ratio of the maximum particle diameter of the solid electrolytes included in the liquid composition relative to the nozzle diameter of the inkjet head (maximum particle diameter of solid electrolytes included in liquid composition/nozzle diameter of inkjet head) is preferably 0.8 or less, more preferably 0.6 or less, still more preferably 0.5 or less. In a case where the maximum particle diameter of the solid electrolytes is within these ranges, discharge stability of the liquid composition is improved.

For example, a droplet observation device (EV1000 (manufactured by Ricoh Co., Ltd)) has the nozzle diameter of 40 µm. In this case, the maximum particle diameter of the solid electrolyte included in the liquid composition is preferably 32 µm or less, more preferably 24 µm or less, still more preferably 20 µm or less. Note that the maximum particle diameter is a diameter which has the maximum value of distribution in the measured particle size distributions of the solid electrolyte in the liquid composition.

A method for measuring the maximum particle diameter of the solid electrolyte is not particularly limited and can be appropriately selected depending on the purpose. For example, the maximum particle diameter can be measured according to ISO 13320:2009. A device used for the measurement is not particularly limited and can be appropriately selected depending on the purpose. Examples thereof include a laser diffraction particle size distribution measurement device Mastersizer 3000 (manufactured by Malvern Panalytical Ltd.).

The mode diameter of the solid electrolyte of the present embodiment is not particularly limited as long as the effects of the present invention are not impaired, and the mode diameter can be appropriately selected depending on the purpose. However, the mode diameter is preferably 0.1 µm or more and 10 µm or less, more preferably 0.5 µm or more and 3 µm or less. In a case where the mode diameter of the solid electrolyte is 0.1 µm or more and 10 µm or less, discharge failure is less likely to occur when the liquid composition is discharged by the liquid discharge method. Within these ranges, the mode diameter is particularly preferably 1.8 µm or more, because the ionic conductivity tends to be high. Note that the mode diameter is a diameter where its distribution reaches the local maximum in the measured particle size distributions of the solid electrolyte in the liquid composition.

D90 of the solid electrolyte of the present embodiment is not particularly limited as long as the effects of the present invention are not impaired and can be appropriately selected depending on the purpose. However, D90 is preferably 15 µm or less, and more preferably 4 µm or less. Here, D90 is a volume-based cumulative particle diameter at 90%.

A method for measuring the mode diameter and D90 of the solid electrolyte is not particularly limited and can be appropriately selected depending on the purpose. For example, the mode diameter can be measured according to ISO 13320:2009.

A device used for the measurement is not particularly limited and can be appropriately selected depending on the purpose. Example thereof include a laser diffraction particle size distribution measurement device Mastersizer 3000 (manufactured by Malvern Panalytical Ltd.).

The content of the solid electrolyte in the liquid composition is not particularly limited and can be appropriately selected depending on the purpose. However, from the viewpoint of productivity, the content is preferably 20% by mass or more relative to the total amount of the liquid composition, and from the viewpoint of discharge performance in the inkjet method, the content is preferably 50% by mass or less relative to the total amount of the liquid composition.

### <Dispersion medium>

The dispersion medium includes a ring-containing hydrocarbon or phenyl ether, each including 9 or more atoms other than hydrogen atom. The dispersion medium can prevent deterioration of the solid electrolyte. Further, the dispersion medium has a relatively high boiling point, and can prevent drying on inkjet heads, which is preferable.

The dispersion medium may be used alone or in combination of two or more types.

It is preferable to volatilize and dry the dispersion medium when the solid-electrolyte-containing layer is formed. Thus, the dispersion medium is preferably composed of 10 or less atoms other than hydrogen atom, so that the boiling point of the dispersion medium is kept relatively low.

The ring contained in the dispersion medium is preferably an aromatic ring, in terms of having a good balance between discharge performance and de-cap performance.

The boiling point of the dispersion medium is not particularly limited and can be appropriately selected depending on the purpose. However, the boiling point is preferably 165°C or higher for better de-cap performance, and preferably lower than 190°C for better drying performance. In the present disclosure, the boiling point of the dispersion medium refers to a boiling point measures under 1 atmospheric pressure.

The ring-containing hydrocarbon including 9 or more atoms other than hydrogen atom is not particularly limited and can be appropriately selected from an aromatic or aliphatic hydrocarbon depending on the purpose. Examples thereof include tert-butylbenzene, 1,2,4-trimethylbenzene, isobutylbenzene, vinyltoluene, p-cymene, diisopropylbenzene, tetralin, α-pinene, β-pinene, carene, p-menthane, α-terpinene, limonene, decalin, methylcyclopentadiene dimer, bicyclohexyl, and mesitylene, without being limited thereto.

The phenyl ether including 9 or more atoms other than hydrogen atom is not particularly limited and can be appropriately selected depending on the purpose. Examples thereof include phenetole, 4-methylanisole, allyl phenyl ether, and butyl phenyl ether, without being limited thereto.

The content of the dispersion medium in the liquid composition is not particularly limited and can be appropriately selected depending on the purpose. However, the content is preferably 40% by mass or more relative to the total amount of the liquid composition from the viewpoint of discharge performance in the inkjet method, and the content is preferably 80% by mass or less relative to the total amount of the liquid composition from the viewpoint of productivity.

### <Other components>

Other components described above are not particularly limited as long as the effects of the present invention are not impaired, and other components can be appropriately selected depending on the purpose. Examples thereof include a dispersant and a binder.

### <<Dispersant>>

The dispersant is used for dispersing the solid electrolyte.

The dispersant is not particularly limited as long as the solid electrolyte can be dispersed. However, from the viewpoint of dispersibility, a dispersant having an ionic adsorption group is preferable. Further, the dispersant is preferably a material that hardly reacts with the solid electrolyte. In the present specification and claims, the material that hardly reacts with the solid electrolyte refers to a material that hardly changes the ionic conductivity of the solid electrolyte when the solid electrolyte and the material are mixed and left for a certain period of time. A rate of change in the ionic conductivity is preferably 3% or less, more preferably 1% or less, still more preferably 0%.

As the dispersant, a conventionally known dispersant or a commercially available dispersant can be appropriately used. Example thereof include a polymer dispersant such as a polyethylene-based, polyethylene oxide-based, polypropylene oxide-based, polycarboxylic acid-based, naphthalene sulfonic acid formalin condensation-based, polyethylene glycol-based, polycarboxylic acid partial alkyl ester-based, polyether-based, or polyalkylene polyamine-based dispersant, a low-molecular dispersant such as an alkyl sulfonic acid-based, quaternary ammonium-based, higher alcohol alkylene oxide-based, polyhydric alcohol ester-based, or alkyl polyamine-based dispersant, and an inorganic dispersant such as a polyphosphate dispersant. These may be used alone or in combination of two or more.

The content of the dispersant in the liquid composition is not particularly limited and can be appropriately selected depending on the purpose. However, relative to the solid electrolyte, the upper limit of the content is preferably 5% by mass or less, more preferably 3% by mass or less, still more preferably 1% by mass or less, and the lower limit of the content is preferably 0.1% by mass or more. In a case where the content of the dispersant is within the preferable range, the dispersion stability of the solid electrolyte can be ensured without impairing the surface function of the solid electrolyte.

### <<Binder>>

The binder is not particularly limited as long as nonvolatile components can be bound to each other by the binder. The binder can be appropriately selected depending on the purpose. The binder may be dispersed in the dispersion medium or may be dissolved in the dispersion medium.

As the binder, a conventionally known binder or a commercially available binder can be appropriately used. Examples thereof include poly(butyl methacrylate) (PBMA), polystyrene-block-polybutadiene-block-polystyrene (SBS), polyvinylidene fluoride (PVDF), vinylidene fluoride-hexafluoropropylene copolymer (PVDF-HFP), polytetrafluoroethylene (PTFE), styrene butadiene rubber (SBR), and a polyacrylic resin. These may be used alone or in combination of two or more.

The content of the binder in the liquid composition is not particularly limited and can be appropriately selected depending on the purpose. For example, the content is 0.1 parts by mass to 10 parts by mass relative to 100 parts by mass of the solid electrolyte.

### <Viscosity and solid content concentration of liquid composition>

### [Viscosity]

The viscosity of the liquid composition is preferably set such that the liquid composition can be discharged from the liquid discharge head. The upper limit of the viscosity is preferably 100 mPa·s or less, more preferably 50 mPa·s or less, still more preferably 20 mPa·s or less. Further, the lower limit of the viscosity is preferably 5 mPa·s or more. Setting the viscosity to the above-mentioned lower limit or more can prevent dripping in the process of drying the applied liquid composition, thereby preventing unevenness in film thickness and compositional unevenness during drying.

A method for measuring the viscosity of the liquid composition is not particularly limited and can be selected as appropriate depending on the purpose. For example, the viscosity can be measured at room temperature (25°C) using a viscometer (manufactured by AMETEK Brookfield, DV2T) at a rotation speed of 50 rpm.

### [Solid content concentration]

In the present specification, the term "solid content concentration" of the liquid composition refers to the mass percentage of the mass of contained components excluding the solvent relative to the total mass of the liquid composition. The contained components excluding the solvent refer to components that do not cause a weight loss at 120°C under vacuum and include not only the solid electrolyte but also a viscoelastic material such as a dispersant.

The solid content concentration of the liquid composition is not particularly limited and can be appropriately selected depending on the purpose. However, the solid content concentration is preferably 20% by mass or more, more preferably 30% by mass or more.

### <Method for producing liquid composition>

The liquid composition can be produced by dissolving or dispersing each of the components in the dispersion medium.

Specifically, each of the components and the dispersion medium are mixed using a mixer such as a ball mill, a sand mill, a bead mill, a pigment dispersion machine, a crusher, an ultrasonic dispersion machine, a homogenizer, a planetary mixer, or FILMIX, thereby preparing the liquid composition.

The use of the liquid composition is not particularly limited and can be selected as appropriate depending on the purpose. For example, the liquid composition can be suitably used as a material for forming a solid-electrolyte-containing layer such as an electrode composite layer or a solid electrolyte layer in an electrochemical element. For example, the liquid composition can be suitably used as a liquid composition for forming a solid electrolyte layer of a secondary battery.

The liquid composition can be suitably used as an inkjet ink composition.

### (Electrode)

An electrode (also referred to as an electrode for a secondary battery) according to an embodiment of the present invention includes an electrode base body and an electrode composite layer formed on the electrode base body. The electrode composite layer is formed using the liquid composition according to an embodiment of the present invention. Note that each component included in the electrode composite layer is the same as that included in the liquid composition, and a preferable abundance ratio of each component in the electrode composite layer is the same as the preferable abundance ratio of each component in the liquid composition.

Since the electrode according to an embodiment of the present invention uses the liquid composition according to an embodiment of the present invention, the electrode composite layer can be satisfactorily formed on a current collector.

### <Electrode base body (current collector)>

As a material forming the electrode base body, a material that is electrically conductive and electrochemically durable is used. Specifically, as the electrode base body, for example, an electrode base body made of iron, copper, aluminum, nickel, stainless steel, titanium, tantalum, gold, platinum, or the like can be used. Note that one type of the above-mentioned material may be used alone, or two or more types may be used in combination at any ratio.

### <Electrode production method>

A method for producing an electrode according to an embodiment of the present invention includes a step of applying the liquid composition according to an embodiment of the present invention onto an electrode base body, and further optionally includes other steps.

There are no particular limitations on a method for applying the liquid composition. Examples thereof include a liquid discharge method such as an inkjet method, a spray coating method, or a dispenser method, a spin coating method, a casting method, a micro-gravure coating method, a gravure coating method, a bar coating method, a roll coating method, a wire bar coating method, a dip coating method, a slit coating method, a capillary coating method, a nozzle coating method, a gravure printing method, a screen printing method, a flexographic printing method, an offset printing method, and a reverse printing method. Of these, an inkjet method is particularly preferable. When the inkjet method is used, an electrode can be produced in any shape in a non-contact manner. As a result, the method exhibits effects such as a reduced loss of the active material due to punching during the production process of the electrode. In this process, the liquid composition may be applied to only one side of the current collector or may be applied to both sides. The thickness of the liquid composition on the current collector after coating but before drying can be appropriately set depending on the thickness of the electrode composite layer obtained by drying.

A method for drying the liquid composition on the current collector is not particularly limited, and any known method can be used. Examples thereof include a drying method using warm air, hot air, or low humidity air, a vacuum drying method, and a drying method using irradiation of infrared rays, electron beams, or the like. Drying the liquid composition on the current collector in this manner makes it possible to form the electrode composite layer on the current collector, thereby obtaining an electrode including the current collector and the electrode composite layer.

### (Laminated body of solid electrolyte layer and electrode)

A laminated body of a solid electrolyte layer and an electrode according to according to an embodiment of the present invention includes an electrode and a solid electrolyte layer formed on the electrode. The solid electrolyte layer is formed using the liquid composition according to an embodiment of the present invention. Note that each component included in the solid electrolyte layer is the same as that included in the liquid composition, and a preferable abundance ratio of each component in the solid electrolyte layer is the same as the preferable abundance ratio of each component in the liquid composition.

Since the laminated body of the present embodiment uses the liquid composition according to an embodiment of the present invention, the solid electrolyte layer can be satisfactorily formed on the electrode.

Note that the solid electrolyte layer can be formed in the same manner as the electrode production method described above except that the solid electrolyte layer is formed on the electrode.

### (Storage container)

A storage container according to an embodiment of the present invention is a storage container in which the above-described liquid composition according to an embodiment of the present invention is stored.

A shape, structure, and size of the storage container are not particularly limited and can be appropriately selected depending on the purpose.

A method for producing the solid-electrolyte-containing layer using particularly an inkjet method will be described below.

### (Solid-electrolyte-containing layer production apparatus and solid-electrolyte-containing layer production method)

An apparatus for producing a solid-electrolyte-containing layer (hereinafter may be referred to as "solid-electrolyte-containing layer production apparatus") according to an embodiment of the present invention includes the above-mentioned storage container according to an embodiment of the present invention and a discharge unit that discharges the liquid composition stored in the storage container using an inkjet head (also referred to as a "liquid discharge head"), and further optionally includes other components.

A method for producing a solid-electrolyte-containing layer (hereinafter may be referred to as "solid-electrolyte-containing layer production method") according to an embodiment of the present invention includes a discharging step of discharging the above-described liquid composition according to an embodiment of the present invention using an inkjet head, and further optionally includes other steps.

The solid-electrolyte-containing layer can be formed into various layers depending on the type of the solid electrolyte used. Examples thereof include a solid electrolyte layer and an electrode composite layer.

### <Discharge unit and discharge step>

The discharge unit is a unit that discharges the liquid composition stored in the storage container using the inkjet head.

The discharge step is a step for discharging the liquid composition using the inkjet head.

Through the discharge, the liquid composition can be applied onto a target object, thereby forming a liquid composition layer.

The target object (hereinafter also referred to as "discharge target object") is not particularly limited as long as the target object is an object on which the solid-electrolyte-containing layer is formed, and the target object can be appropriately selected depending on the purpose. Examples thereof include an electrode base body (also referred to as a "current collector") and an active material layer.

### <Other components and other steps>

Other components of the solid-electrolyte-containing layer production apparatus are not particularly limited as long as the effects of the present invention are not impaired, and other components can be appropriately selected depending on the purpose. Examples thereof include a heating unit.

Other steps of the solid-electrolyte-containing layer production method are not particularly limited as long as the effects of the present invention are not impaired, and other steps can be appropriately selected depending on the purpose. Examples thereof include a heating step.

### -Heating unit and heating step-

The heating unit is a unit for heating the liquid composition discharged by the discharge unit.

The heating step is a step for heating the liquid composition discharged in the discharge step.

Through the heating, the liquid composition layer can be dried.

### [Embodiment in which solid-electrolyte-containing layer is formed by directly applying liquid composition to base material]

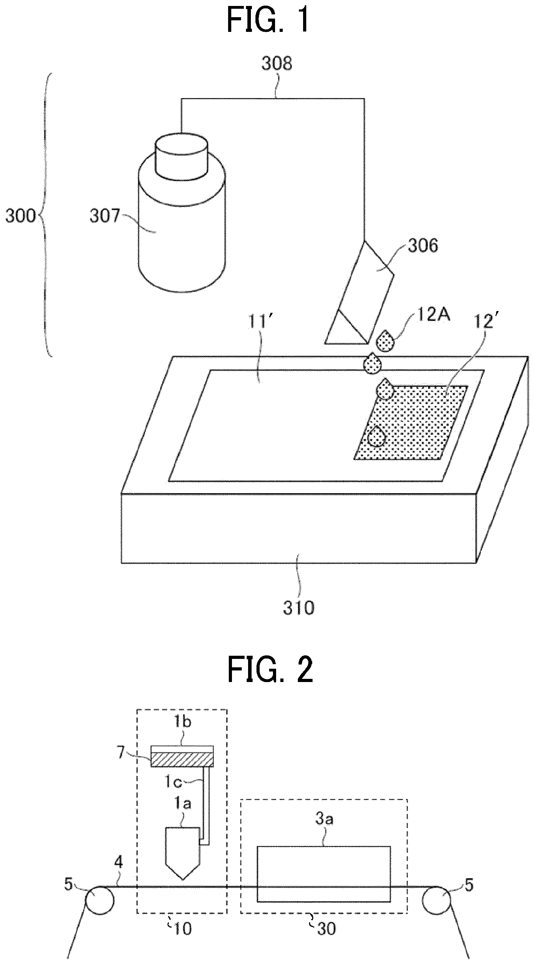

FIG. 1 is a schematic diagram illustrating a method for producing a solid-electrolyte-containing layer according to according to an embodiment of the present invention.

A liquid composition 12A is stored in a tank 307 of a liquid discharge device 300 and is supplied from the tank 307 to a liquid discharge head 306 via a tube 308. Note that the number of the liquid discharge device is not limited to one and may be two or more.

When the solid-electrolyte-containing layer is produced, an electrode 11' is placed on a stage 310, and then a droplet of the liquid composition 12A is discharged from the liquid discharge head 306 onto the electrode 11'. In this process, the stage 310 may be moved, or the liquid discharge head 306 may be moved. The discharged liquid composition 12A becomes a solid-electrolyte-containing layer 12'.

Further, the liquid discharge device 300 may include a mechanism for capping a nozzle to prevent the liquid composition 12A from being dried when the liquid composition 12A is not discharged from the liquid discharge head 306.

FIG. 2 is a schematic diagram illustrating an apparatus for producing a solid-electrolyte-containing layer for achieving the method for producing the solid-electrolyte-containing layer according to an embodiment of the present invention.

The solid-electrolyte-containing layer production apparatus presented in FIG. 2 is an apparatus for producing the solid-electrolyte-containing layer using the above-described liquid composition. The solid-electrolyte-containing layer production apparatus includes a discharge process unit 10 that performs a step of applying the liquid composition onto a printing base material 4 having a discharge target object, thereby forming a liquid composition layer, and a heating process unit 30 that performs a heating step of heating the liquid composition layer, thereby obtaining a solid-electrolyte-containing layer. The solid-electrolyte-containing layer production apparatus includes a conveyance unit 5 that conveys the printing base material 4, and the conveyance unit 5 conveys the printing base material 4 at a determined speed to the discharge process unit 10 and the heating process unit 30 in this order.

There are no particular limitations on a method for producing the printing base material 4 having the discharge target object such as the electrode base body or the active material layer, and any known method can be appropriately selected.

The discharge process unit 10 includes a printer 1a freely selected according to the inkjet printing method, which is an application unit that achieves an application process of applying the liquid composition onto the printing base material 4, a storage container 1b that stores the liquid composition, and a supply tube 1c that supplies the liquid composition stored in the storage container 1b to the printer 1a.

The storage container 1b stores a liquid composition 7, and the discharge process unit 10 discharges the liquid composition 7 from the printer 1a and applies the liquid composition 7 onto the printing base material 4, thereby forming the liquid composition layer into a thin film. Note that the storage container 1b may have a structure that is integrated with the solid-electrolyte-containing layer production apparatus, or may have a structure that is removable from the solid-electrolyte-containing layer production apparatus. Alternatively, the storage container 1b may be a container that is used for supplying the liquid composition to a storage container integrated with the solid-electrolyte-containing layer production apparatus or a storage container that can be removed from the solid-electrolyte-containing layer production apparatus.

The storage container 1b and the supply tube 1c can be freely selected as long as they can stably store and supply the liquid composition 7.

As illustrated in FIG. 2, the heating process unit 30 includes a heater 3a and performs a dispersion medium removal step in which the dispersion medium remaining in the liquid composition layer is heated and dried by the heater 3a and removed. In this manner, the solid-electrolyte-containing layer can be formed. The heating process unit 30 may perform the dispersion medium removal step under reduced pressure.

The heater 3a is not particularly limited and can be selected as appropriate depending on the purpose. Examples thereof include substrate heating, an IR heater, and a hot air heater. These may be used in combination.

Further, the heating temperature and time can be appropriately selected depending on the boiling point of the dispersion medium included in the liquid composition 7 and the thickness of the film to be formed.

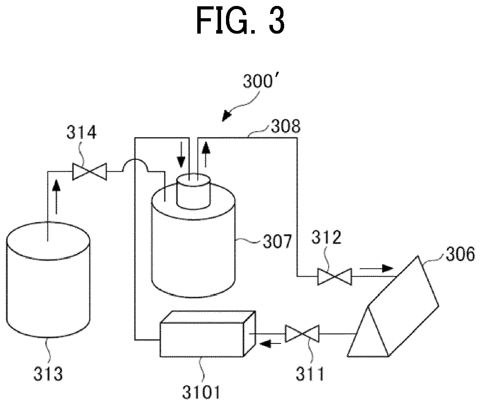

FIG. 3 is a schematic diagram illustrating another example of the solid-electrolyte-containing layer production apparatus (liquid discharge device) that achieves the solid-electrolyte-containing layer production method according to an embodiment of the present invention.

A liquid discharge device 300' can circulate the liquid composition through the liquid discharge head 306, the tank 307, and the tube 308 by controlling a pump 3101 and valves 311 and 312.

Further, the liquid discharge device 300' includes an external tank 313, and when the liquid composition in the tank 307 decreases, the liquid composition can be supplied from the external tank 313 to the tank 307 by controlling the pump 3101 and valves 311, 312, and 314.

Using the solid-electrolyte-containing layer production apparatus allows the liquid composition to be discharged to a targeted area on the discharge target object.

The solid-electrolyte-containing layer can be suitably used, for example, as a part of components of an electrochemical element. The components of the electrochemical element other than the solid-electrolyte-containing layer are not particularly limited and can be appropriately selected from known components. Examples thereof include a positive electrode, a negative electrode, and a separator.

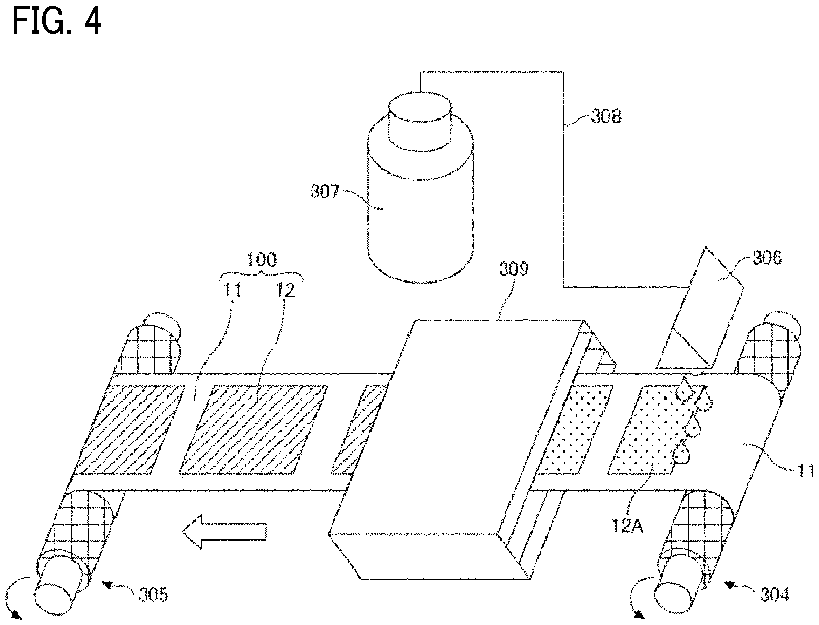

FIG. 4 is a schematic diagram illustrating a method for producing an electrode according to an embodiment of the present invention.

The method for producing an electrode 100 includes a step of sequentially discharging the liquid composition 12A onto an electrode base body 11 using the liquid discharge device 300'.

First, the elongated electrode base body 11 is prepared. Then, the electrode base body 11 is wound around a cylindrical core and set on a feed roller 304 and a take-up roller 305 so that the side on which an electrode composite layer 12 is formed is on the upper side in the drawing. In this configuration, the feed roller 304 and the take-up roller 305 rotate counterclockwise, and the electrode base body 11 is conveyed in a right-to-left direction in the drawing. Then, in the same manner as in FIG. 1, a droplet of the liquid composition 12A is discharged onto the electrode base body 11, which is sequentially conveyed, from the liquid discharge head 306 installed above the electrode base body 11 between the feed roller 304 and the take-up roller 305.

Note that a plurality of the liquid discharge heads 306 may be installed in a direction substantially parallel or substantially perpendicular to the convey direction of the electrode base body 11. Next, the electrode base body 11 onto which the droplet of the liquid composition 12A has been discharged is conveyed to a heating mechanism 309 by the feed roller 304 and the take-up roller 305. As a result, the electrode composite layer 12 is formed and the electrode 100 is obtained. Thereafter, the electrode 100 is cut into a desired size by punching or the like.

The heating mechanism 309 may be installed either above or below the electrode base body 11, or a plurality of the heating mechanisms 309 may be installed.

The heating mechanism 309 is not particularly limited as long as the heating mechanism 309 does not directly contact with the liquid composition 12A. Examples thereof include a resistance heater, an infrared heater, and a fan heater. Note that a plurality of the heating mechanisms 309 may be installed. Further, a curing device using ultraviolet rays for polymerization may be installed.

Further, the liquid composition 12A discharged onto the electrode base body 11 is preferably heated, and when heated, the heating may be performed by a stage or by a heating mechanism other than the stage. The heating mechanism may be installed either above or below the electrode base body 11, or a plurality of the heating mechanisms may be installed.

The heating temperature is not particularly limited. The liquid composition 12A is dried by heating to form an electrode composite layer.

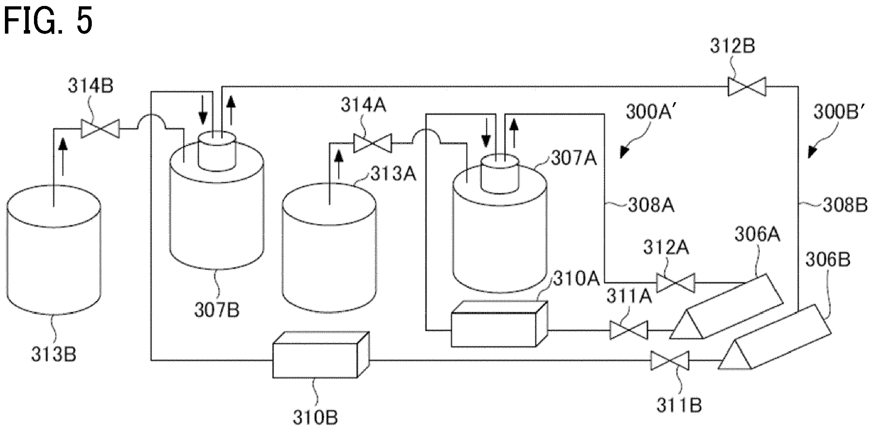

Further, as illustrated in FIG. 5, the tank 307 may be supplied with ink from tanks 313A and 313B connected to tanks 307A and 307B, and the liquid discharge head 306 may include a plurality of heads 306A and 306B.

### [Embodiment in which solid-electrolyte-containing layer is formed by indirectly applying liquid composition to base material]

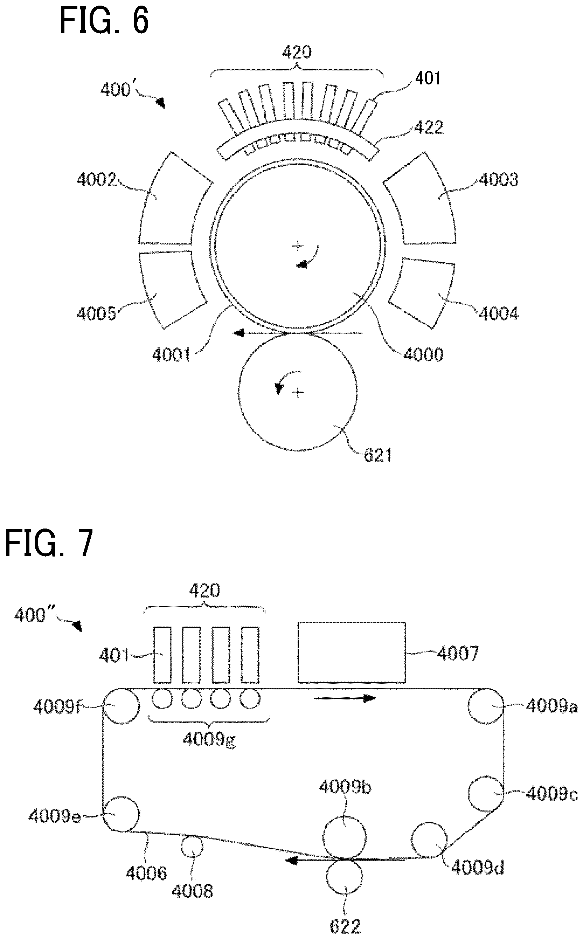

FIGS. 6 and 7 are configuration diagrams each illustrating a printer as the solid-electrolyte-containing layer production apparatus according to an embodiment of the present invention that employs an inkjet method and a transfer method as application unit. FIG. 6 is a configuration diagram illustrating a printer using a drum-shaped intermediate transfer body, and FIG. 7 is a configuration diagram illustrating a printer using an endless belt-shaped intermediate transfer body.

A printer 400' illustrated in FIG. 6 is an inkjet printer that forms the solid-electrolyte-containing layer on a base material by transferring the liquid composition layer to the base material via an intermediate transfer body 4001.

The printer 400' includes an inkjet unit 420, a transfer drum 4000, a preprocessing unit 4002, an absorption unit 4003, a heater 4004, and a cleaning unit 4005.

The inkjet unit 420 includes a head module 422 holding a plurality of heads 401. The heads 401 discharge the liquid composition onto the intermediate transfer body 4001 supported by the transfer drum 4000 to form a liquid composition layer on the intermediate transfer body 4001. Each head 401 is a line head and has nozzles arranged in a range that covers the width of a recording area of the largest usable size of the base material. The head 401 includes a nozzle surface on which the nozzles are formed on its lower surface, and the nozzle surface faces the surface of the intermediate transfer body 4001 with a small gap interposed therebetween. In the case of the present embodiment, the intermediate transfer body 4001 is configured to circularly move on a circular orbit, thus the plurality of the heads 401 are arranged radially.

The transfer drum 4000 faces an impression cylinder 621 to form a transfer nip. The preprocessing unit 4002 applies a reaction liquid for increasing the viscosity of the liquid composition onto, for example, the intermediate transfer body 4001 before the heads 401 discharge the liquid composition. The absorption unit 4003 absorbs a liquid component from the liquid composition layer on the intermediate transfer body 4001 before transfer. The heater 4004 heats the liquid composition layer on the intermediate transfer body 4001 before transfer. The liquid composition layer is dried by heating to form a solid-electrolyte-containing layer. Further, the dispersion medium is removed by heating, which improves the transferability to the base material. The cleaning unit 4005 cleans the surface of the intermediate transfer body 4001 after the transfer to remove a foreign matter such as ink or dust remaining on the intermediate transfer body 4001.

The outer peripheral surface of the impression cylinder 621 is in pressure contact with the intermediate transfer body 4001, and when the base material passes through the transfer nip between the impression cylinder 621 and the intermediate transfer body 4001, the liquid composition layer on the intermediate transfer body 4001 is transferred to the base material. Note that the impression cylinder 621 may be configured to include at least one grip mechanism on its outer peripheral surface for holding the tip of the base material.

A printer 400" illustrated in FIG. 7 is an inkjet printer that forms the solid-electrolyte-containing layer on a base material by transferring the liquid composition layer to the base material via an intermediate transfer belt 4006.

The printer 400" discharges the droplets of the liquid composition from the plurality of heads 401 provided in the inkjet unit 420 to form the liquid composition layer on the outer peripheral surface of the intermediate transfer belt 4006. The liquid composition layer formed on the intermediate transfer belt 4006 is heated by a heater 4007 and dried to form the solid-electrolyte-containing layer, which is formed into a film on the intermediate transfer belt 4006.

At a transfer nip where the intermediate transfer belt 4006 faces a transfer roller 622, the solid-electrolyte-containing layer formed into a film on the intermediate transfer belt 4006 is transferred to the base material. After the transfer, the surface of the intermediate transfer belt 4006 is cleaned by a cleaning roller 4008.

The intermediate transfer belt 4006 is stretched over a driving roller 4009a, a facing roller 4009b, a plurality of (four in the present example) shape maintaining rollers 4009c, 4009d, 4009e, and 4009f, and a plurality of (four in the present example) support rollers 4009g, and the intermediate transfer belt 4006 moves in the direction of the arrow in the drawing. The support rollers 4009g provided so as to face the heads 401 maintain the tension state of the intermediate transfer belt 4006 when ink droplets are discharged from the heads 401.

### <Negative electrode>

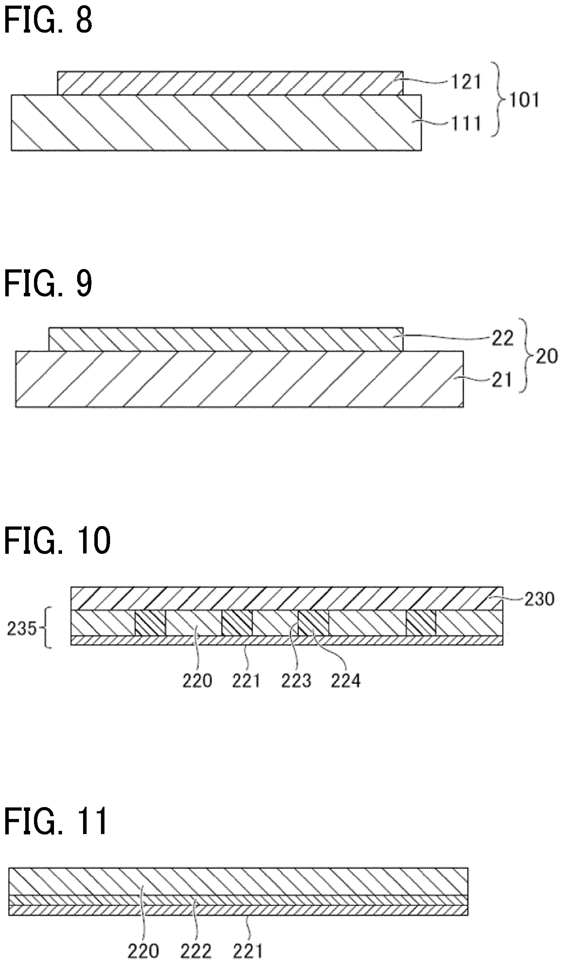

FIG. 8 is a diagram illustrating a negative electrode according to an embodiment of the present invention.

In a negative electrode 101, a negative electrode composite layer 121 is formed on one side of a negative electrode base body 111. There are no particular limitations on the shape of the negative electrode 101. Examples thereof include a flat plate shape. Examples of a material constituting the negative electrode base body 111 include stainless steel, nickel, aluminum, and copper.

Note that the negative electrode composite layer 121 may be formed on both sides of the negative electrode base body 111.

The negative electrode can be produced using the solid-electrolyte-containing layer production apparatus described above.

### <Positive electrode>

FIG. 9 is a diagram illustrating a positive electrode according to an embodiment of the present invention.

In a positive electrode 20, a positive electrode composite layer 22 is formed on one side of a positive electrode base body 21. There are no particular limitations on the shape of the positive electrode 20. Examples thereof include a flat plate shape. Examples of a material constituting the positive electrode base body 21 include stainless steel, aluminum, titanium, and tantalum.

Note that the positive electrode composite layer 22 may be formed on both sides of the positive electrode base body 21.

The positive electrode can be produced using the solid-electrolyte-containing layer production apparatus described above.

### (Electrochemical element)

An electrochemical element according to an embodiment of the present invention includes a layer including at least a solid electrolyte on an electrode, and further optionally includes other components.

The solid electrolyte is the same as the solid electrolyte in the liquid composition described above.

The electrochemical element can include other components such as an exterior in addition to a positive electrode, a negative electrode, and the layer including at least the solid electrolyte. The electrochemical element uses the liquid composition according to an embodiment of the present invention as the layer including at least the solid electrolyte.

A lithium-ion secondary battery will be described below as an example of the electrochemical element. However, the present invention is not limited to the following example.

### <Electrode>

The electrode that can be used in the secondary battery is not particularly limited, and a known electrode used in the production of the secondary battery can be used. Specifically, an electrode in which an electrode composite layer is formed on a current collector using a known production method can be used.

The electrode composite layer in the electrode may gave an opening 223 as illustrated in FIG. 10. FIG. 10 is a cross-sectional view of a laminated body of a solid electrolyte layer and an electrode according to an embodiment of the present invention. The laminated body of a solid electrolyte layer and an electrode includes: an electrode 235 including a base body 221 and an electrode composite layer 220 disposed on the base body 221; and a solid electrolyte layer 230 disposed on the electrode composite layer 220.

The number of the openings 233 is preferably one or more, and more preferably two or more.

The opening 223 may penetrate the electrode composite layer from the surface of the electrode composite layer to the surface of the base body, or may not penetrate to the surface of the base body.

The opening 223 may be filled with a material 224, or may not be filled with anything. In a case in which the opening 223 is filled with the material 224, the material 224 may be a single material or a mixture of two or more materials. In each case, the material filling the opening is different from the material composing the electrode composite layer in terms of compound and composition. In a case in which the opening is filled with the material, for improving ionic conductivity, the opening is preferably filled with a material containing the solid electrolyte that is contained in the solid electrolyte layer, and more preferably a material having the same composition as the solid electrolyte layer.

The electrode composite layer having the opening is suitably produced by using an inkjet printer, as an electrode composite layer forming device, for its ease in control of application.

As illustrated in FIG. 11, an adhesion layer 222 containing a metal that alloys with lithium may be formed between the base body 221 and the electrode composite layer 220. FIG. 11 is a cross-sectional view of an electrode according to an embodiment of the present invention. The electrode includes, between the base body 221 and the electrode composite layer 220 disposed above the based body 221, the adhesion layer 222.

### <Electrolyte>

The electrolyte other than the solid electrolyte layer according to an embodiment of the present invention described above that can be used in the secondary battery is not particularly limited. A known solid electrolyte or electrolytic liquid used in the production of the secondary battery can be used.

### <Exterior>

The exterior is not particularly limited as long as the electrode and the solid electrolyte can be sealed.

### (Electrochemical element production apparatus and electrochemical element production method)

An apparatus for producing the electrochemical element (hereinafter may be referred to as "electrochemical element production apparatus") according to an embodiment of the present invention includes a solid-electrolyte-containing layer production portion that produces a solid-electrolyte-containing layer by the above-mentioned solid-electrolyte-containing layer production apparatus according to an embodiment of the present invention, and further optionally includes other components.

A method for producing the electrochemical element (hereinafter may be referred to as "electrochemical element production method") according to an embodiment of the present invention includes a step of forming a solid-electrolyte-containing layer by the above-mentioned solid-electrolyte-containing layer production method according to an embodiment of the present invention, and further optionally includes other configurations.

The electrochemical element production apparatus and the electrochemical element production method according to embodiments of the present invention can be achieved by appropriately selecting known unit and method, except that the solid-electrolyte-containing layer production portion and the step of forming the solid-electrolyte-containing layer described above are used.

The electrochemical element according to an embodiment of the present invention can be produced, for example, as follows: a positive electrode and a negative electrode are stacked one on another with the solid electrolyte interposed between them, the resulting product is optionally rolled or folded according to the shape of the battery and placed in a battery container, and the battery container is filled with an electrolytic liquid and sealed.

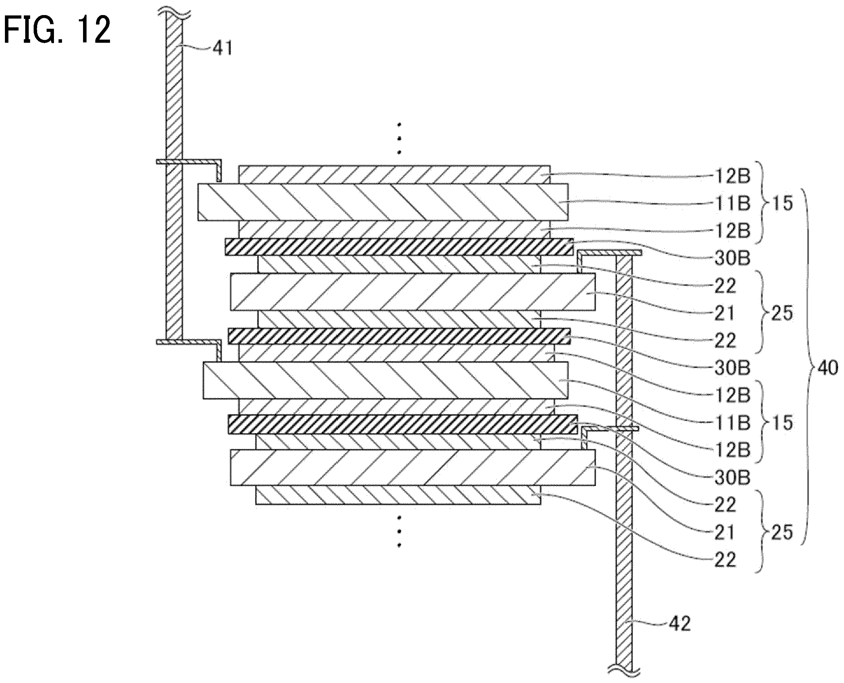

FIG. 12 is a diagram illustrating an electrode element used in the electrochemical element according to an embodiment of the present invention.

In an electrode element 40, a negative electrode 15 and a positive electrode 25 are laminated with a solid electrolyte 30B interposed therebetween. In this example, the positive electrodes 25 are laminated on both sides of the negative electrode 15. Further, a lead wire 41 is connected to the negative electrode base body 11B, and a lead wire 42 is connected to the positive electrode base body 21.

In the negative electrodes 15, negative electrode composite layers 12B are formed on both sides of the negative electrode base body 11B.

In the positive electrodes 25, positive electrode composite layers 22 are formed on both sides of the positive electrode base body 21.

Note that the number of stacked layers of the negative electrode 15 and the positive electrode 25 of the electrode element 40 is not particularly limited. Further, the number of the negative electrode 15 and the number of the positive electrode 25 of the electrode element 40 may be the same or different.

### <Electrochemical element>

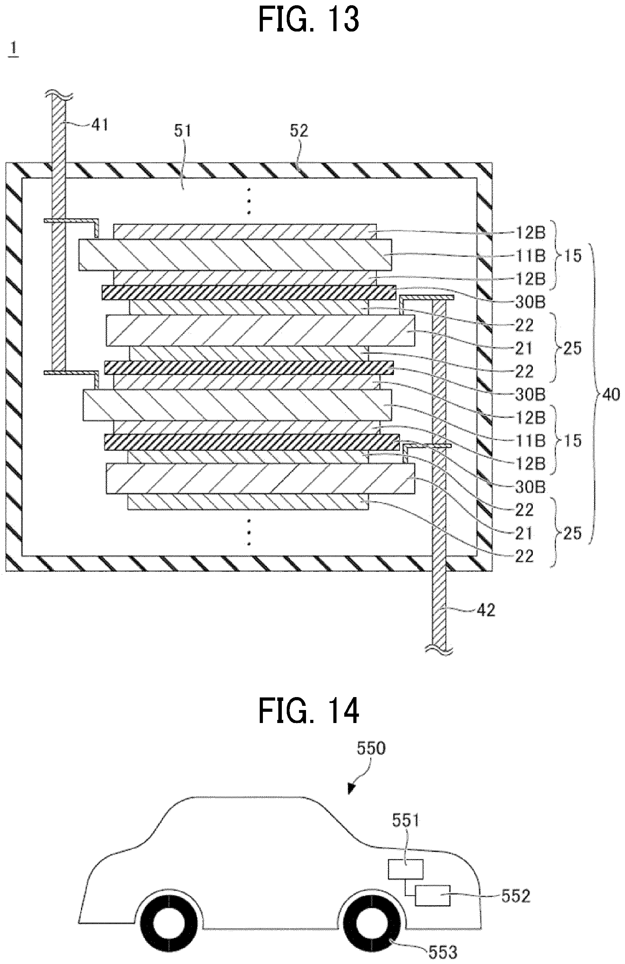

FIG. 13 is a diagram illustrating an electrochemical element according to an embodiment of the present invention.

In a case where an electrochemical element 1 is a solid electrochemical element, a solid electrolyte layer 51 is formed in the electrode element 40 and sealed with an exterior 52. In the electrochemical element 1, the lead wires 41 and 42 are drawn out to the outside of the exterior 52.

There are no particular limitations on the shape of the electrochemical element 1. Examples thereof include a laminate type, a cylinder type in which a sheet electrode and a solid electrolyte layer are formed in a spiral shape, a cylinder type with an inside-out structure having a pellet electrode and a solid electrolyte layer combined, and a coin type in which a pellet electrode and a solid electrolyte layer are stacked one on another.

### <Use of electrochemical element>

The electrochemical element can be suitably used as a secondary battery.

The use of the electrochemical element is not particularly limited and can be selected as appropriate depending on the purpose. Examples thereof include: a mobile object such as a vehicle; and an electric device such as a smartphone, a notebook computer, a pen input computer, a mobile computer, an e-book player, a mobile phone, a mobile fax machine, a mobile copier, a mobile printer, a stereo headphone, a video movie recorder, a liquid crystal display television, a handheld vacuum cleaner, a portable CD player, a MiniDisc player, a transceiver, an electronic diary, a calculator, a memory card, a portable tape recorder, a radio, a backup power supply, a motor, lighting equipment, a toy, a gaming device, a watch, an electronic flash, or a camera. Of these, a vehicle and an electric device are particularly preferable.

Examples of the mobile object include a standard motor vehicle, a special large motor vehicle, a special small motor vehicle, a truck, a large motorcycle, and a standard motorcycle.

### [Mobile object]

FIG. 14 is a diagram illustrating a mobile object including an all-solid-state battery which is an example of the electrochemical element according to an embodiment of the present invention. A mobile object 550 is, for example, an electric vehicle. The mobile object 550 includes a motor 551, an electrochemical element 552, and wheels 553 as an example of a moving unit. The electrochemical element 552 is the electrochemical element according to an embodiment of the present invention described above. The electrochemical element 552 drives the motor 551 by supplying electric power to the motor 551. The driven motor 551 can drive the wheels 553, and as a result, the mobile object 550 can move.

According to the above configuration, the mobile object can move safely as the mobile object is driven by electric power from the electrochemical element excellent in peel strength.

The mobile object 550 is not limited to the electric vehicle, and may be a PHEV, a HEV, a locomotive that can run using a combination of a diesel engine and the electrochemical element, or a motorcycle. Further, the mobile object may be a transport robot used in a factory or the like, which can move using the electrochemical element or a combination of an engine and the electrochemical element. Further, the mobile object may be a partially movable object that does not move as a whole, such as, for example, an assembly robot, placed on a factory production line, in which an arm or the like can be operated using the electrochemical element or a combination of an engine and the electrochemical element.

### [Examples]

Embodiments of the present invention will be described below by way of Examples. However, the scope of the present invention is not limited by these Examples.

### (Synthesis example 1: synthesis of inorganic solid electrolyte 1)

As an inorganic solid electrolyte 1, an argyrodite-type sulfide solid electrolyte Li₆PS₅Cl (LPSC) was synthesized according to Literature 1 (Nataly Carolina Rosero-Navarro et al., Journal of Power Sources 396 (2018) 33.).

### (Synthesis example 2: synthesis of inorganic solid electrolyte 2)

As an inorganic solid electrolyte 2, Li₁₀GeP₂S₁₂ (LGPS) was synthesized according to Literature 2 (J. Mater. Chem. A3,438-446 (2015)).

### (Examples 1 to 14 and Comparative examples 1 and 2)

The following materials were prepared as a dispersion medium, a dispersant, and a binder.

### [Dispersion medium]

· p-cymene (manufactured by Kanto Kagaku)
   Number of atoms other than hydrogen atom: 10, boiling point: 176°C
· 1,2,4-trimethylbenzene (manufactured by Kanto Kagaku)
   Number of atoms other than hydrogen atom: 9, boiling point: 169°C
· (R)-(+)-limonene (manufactured by Kanto Kagaku)
   Number of atoms other than hydrogen atom: 10, boiling point: 176°C
· Phenetole (manufactured by Tokyo Chemical Industry Co., Ltd.) Number of atoms other than hydrogen atom: 9, boiling point: 173°C
· Decalin (manufactured by Kanto Kagaku)
   Number of atoms other than hydrogen atom: 10, boiling point: 190°C
· Butyl phenyl ether (manufactured by Tokyo Chemical Industry Co., Ltd.) Number of atoms other than hydrogen atom: 11, boiling point: 210°C
· Mesitylene (manufactured by FUJIFILM Wako Pure Chemical Corp.) Number of atoms other than hydrogen atom: 9, boiling point: 164°C
· (1S)-(-)-α-pinene (manufactured by Tokyo Chemical Industry Co., Ltd.) Number of atoms other than hydrogen atom: 10, boiling point: 155°C
· Tetralin (manufactured by Kanto Kagaku)
   Number of atoms other than hydrogen atom: 10, boiling point: 207°C
· Toluene (manufactured by Kanto Kagaku)
   Number of atoms other than hydrogen atom: 7, boiling point = 111°C
· Xylene (manufactured by Kanto Kagaku)
   Number of atoms other than hydrogen atom: 8, boiling point: 140°C

### [Dispersant]

- Solsperse 3000 (manufactured by Lubrizol Corp.)
- MALIALIM SC0708A (manufactured by NOF Corp.)

### [Binder]

- Poly(butyl methacrylate) (PBMA) (manufactured by Sigma-Aldrich (910716))
- Polystyrene-block-polybutadiene-block-polystyrene (SBS) (manufactured by Sigma-Aldrich (182877))

### <Preparation of liquid composition>

Based on materials and contents (parts by mass) described in Tables 1 to 4, liquid compositions of Examples and Comparative examples were prepared by a conventional method.

### [Evaluation]

The liquid compositions of Examples and Comparative examples were each evaluated for viscosity, particle diameter, discharge evaluation, drying performance after printing (hereinafter also referred to as "drying performance"), and ionic conductivity. The results are presented in Tables 1 to 4.

### <Viscosity>

Tables 1 to 4 present the viscosity of the liquid compositions measured at room temperature (25°C) using a viscometer (manufactured by AMETEK Brookfield, DV2T) at a rotation speed of 50 rpm.

### <Particle diameter>

The liquid composition was diluted 10,000 times and subjected to a measurement using a particle size analyzer (LA-960 manufacture by HORIBA, Ltd.) at room temperature (25°C). The mode diameter and D90 of the solid electrolyte contained in each liquid composition was presented in Tables 1 to 4.

### <Discharge evaluation>

Jetting droplets were observed using a liquid discharge device EV1000S (manufactured by Ricoh Co., Ltd.). Discharge performance, continuous discharge performance, and de-cap performance were evaluated using the following evaluation criteria. The results are presented in Tables 1 to 4.

### · Discharge performance

Good: no misdirection or misfiring
Fair: some misdirection and misfiring
Poor: frequent misdirection and misfiring
· Continuous discharge performance
Good: performing continuous discharge for 30 min
Fair: performing continuous discharge for 3 min
Poor: performing continuous discharge less than 3 min

Note that the term "performing continuous discharge" means that the discharge state can be maintained for a predetermined period of time regardless of the discharge amount. That is, the discharge amount may or may not change within the predetermined period of time.
· De-cap performance
Good: performing re-discharge after 5-min interval
Fair: performing re-discharge after 1-min interval
Poor: Unable to perform re-discharge

Note that the term "performing re-discharge" means that the re-discharge can be performed after a predetermined period of time regardless of the discharge amount. That is, the discharge amount before the interval and the re-discharge amount after the interval may be the same or different.

### <Drying performance after printing>

A film (length 80 mm x width 70 mm x thickness 0.04 mm) formed on an SUS foil was dried on a hot plate and evaluated using the following evaluation criteria. The results are presented in Tables 1 to 4.
Good: can be dried in 5 min at 80°C
Fair: can be dried in 5 min at 120°C
Poor: cannot be dried in 5 min at 120°C

### <Ionic conductivity>

Some of the liquid compositions (Examples 3 and 12-14) were dried, grinded, and subjected to a measurement of ionic conductivity using an instrument Cell Test System 1400 manufactured by Solartron Analytical. The results are presented in Tables 1 to 4.

**Table 1**

| | | Examples | | | | |
|---|---|---|---|---|---|---|
| | | 1 | 2 | 3 | 4 | 5 |
| Solid electrolyte (mass parts) | Inorganic solid electrolyte 1 | 45 | - | 30 | 40 | 30 |
| | Inorganic solid electrolyte 2 | - | 40 | - | - | - |
| Dispersion medium (mass parts) | P-cymene | 50.5 | 59.6 | - | - | - |
| | 1,2,4-trimethylbenzene | - | - | 65.5 | - | - |
| | (R)-(+)-limonene | - | - | - | 56 | - |
| | Phenetole | - | - | - | - | 65.5 |
| | Decalin | - | - | - | - | - |
| | Butyl phenyl ether | - | - | - | - | - |
| | Mesitylene | - | - | - | - | - |
| | (1S)-(-)-a-pinene | - | - | - | - | - |
| | Tetralin | - | - | - | - | - |
| | Toluene | - | - | - | - | - |
| | Xylene | - | - | - | - | - |
| Dispersant (mass parts) | SOLSPERSE 3000 | 4.5 | 0.4 | 3 | 4 | 3 |
| | MALIALIM SC0708A | - | - | - | - | - |
| Binder (mass parts) | PBMA | - | - | 1.5 | - | 1.5 |
| | SBS | - | - | - | - | - |
| Particle diameter (µm) | Mode diameter | 0.8 | 1.5 | 0.8 | 0.8 | 0.8 |
| | D90 | 1.2 | 2.5 | 1.2 | 1.2 | 1.2 |
| Viscosity (mPa·s) | | 12.1 | 8.1 | 7.7 | 7.5 | 12.0 |
| Discharge evaluation | Discharge performance | Good | Good | Good | Good | Fair |
| | Continuous discharge performance | Good | Good | Good | Good | Fair |
| | De-cap performance | Good | Good | Good | Fair | Good |
| Drying performance | | Good | Good | Good | Good | Good |
| Ionic conductivity | | - | - | 1.25 | - | - |

**Table 2**

| | | Examples | | | | |
|---|---|---|---|---|---|---|
| | | 6 | 7 | 8 | 9 | 10 |
| Solid electrolyte (mass parts) | Inorganic solid electrolyte 1 | 40 | 25 | 20 | 20 | 40 |
| | Inorganic solid electrolyte 2 | - | - | - | - | - |
| Dispersion medium (mass parts) | P-cymene | - | - | - | - | - |
| | 1,2,4-trimethylbenzene | - | - | - | - | - |
| | (R)-(+)-limonene | - | - | - | - | - |
| | Phenetole | - | - | - | - | - |
| | Decalin | 58.8 | - | - | - | - |
| | Butyl phenyl ether | - | 71.5 | - | - | - |
| | Mesitylene | - | - | 77 | - | - |
| | (1S)-(-)-a-pinene | - | - | - | 77 | - |
| | Tetralin | - | - | - | - | 56 |
| | Toluene | - | - | - | - | - |
| | Xylene | - | - | - | - | - |
| Dispersant (mass parts) | SOLSPERSE 3000 | 1.2 | 1.75 | 2 | 2 | - |
| | MALIALIM SC0708A | - | - | - | - | 4 |
| Binder (mass parts) | PBMA | - | - | 1 | 1 | - |
| | SBS | - | 1.75 | - | - | - |
| Particle diameter (µm) | Mode diameter | 0.8 | 0.8 | 0.8 | 0.8 | 0.8 |
| | D90 | 1.2 | 1.2 | 1.2 | 1.2 | 1.2 |
| Viscosity (mPa·s) | | 10.7 | 8.4 | 6.5 | 6.8 | 13.0 |
| Discharge evaluation | Discharge performance | Fair | Good | Fair | Fair | Fair |
| | Continuous discharge performance | Good | Good | Good | Fair | Good |
| | De-cap performance | Good | Good | Fair | Fair | Good |
| Drying performance | | Fair | Fair | Good | Good | Fair |
| Ionic conductivity | | - | - | - | - | - |

**Table 3**

| | | Examples | | | |
|---|---|---|---|---|---|
| | | 11 | 12 | 13 | 14 |
| Solid electrolyte (mass parts) | Inorganic solid electrolyte 1 | 30 | 30 | 30 | 30 |
| | Inorganic solid electrolyte 2 | - | - | - | - |
| Dispersion medium (mass parts) | P-cymene | 35.5 | - | - | - |
| | 1,2,4-trimethylbenzene | - | 65.5 | 65.5 | 65.5 |
| | (R)-(+)-limonene | - | - | - | - |
| | Phenetole | 30 | - | - | - |
| | Decalin | - | - | - | - |
| | Butyl phenyl ether | - | - | - | - |
| | Mesitylene | - | - | - | - |
| | (1S)-(-)-a-pinene | - | - | - | - |
| | Tetralin | - | - | - | - |
| | Toluene | - | - | - | - |
| | Xylene | - | - | - | - |
| Dispersant (mass parts) | SOLSPERSE 3000 | 3 | 3 | 3 | 3 |
| | MALIALIM SC0708A | - | - | - | - |
| Binder (mass parts) | PBMA | 1 | 1.5 | 1.5 | 1.5 |
| | SBS | 0.5 | - | - | - |
| Particle diameter (µm) | Mode diameter | 1.0 | 1.0 | 1.8 | 3.0 |
| | D90 | 1.4 | 1.4 | 2.7 | 4.0 |
| Viscosity (mPa·s) | | 10.0 | 7.5 | 7.5 | 7.2 |
| Discharge evaluation | Discharge performance | Good | Good | Good | Good |
| | Continuous discharge performance | Good | Good | Good | Good |
| | De-cap performance | Good | Fair | Fair | Fair |
| Drying performance | | Good | Good | Good | Good |
| Ionic conductivity | | - | 1.34 | 1.51 | 1.76 |

**Table 4**

| | | Comparative examples | |
|---|---|---|---|
| | | 1 | 2 |
| Solid electrolyte (mass parts) | Inorganic solid electrolyte 1 | 40 | 30 |
| | Inorganic solid electrolyte 2 | - | - |
| Dispersion medium (mass parts) | P-cymene | - | - |
| | 1,2,4-trimethylbenzene | - | - |
| | (R)-(+)-limonene | - | - |
| | Phenetole | - | - |
| | Decalin | - | - |
| | Butyl phenyl ether | - | - |
| | Mesitylene | - | - |
| | (1S)-(-)-a-pinene | - | - |
| | Tetralin | - | - |
| | Toluene | 56 | - |
| | Xylene | - | 65.5 |
| Dispersant (mass parts) | SOLSPERSE 3000 | 4 | 3 |
| | MALIALIM SC0708A | - | - |
| Binder (mass parts) | PBMA | - | 1.5 |
| | SBS | - | - |
| Particle diameter (µm) | Mode diameter | 0.8 | 0.8 |
| | D90 | 1.2 | 1.2 |
| Viscosity (mPa·s) | | 8.0 | 11.4 |
| Discharge evaluation | Discharge performance | Poor | Poor |
| | Continuous discharge performance | Poor | Poor |
| | De-cap performance | Poor | Poor |
| Drying performance | | - | - |
| Ionic conductivity | | - | - |

Based on the results in Tables 1 to 4, the result of the discharge evaluation was found to be good by using the dispersion medium which was the ring-containing hydrocarbon or phenyl ether, each having 9 or more atoms other than hydrogen atom.

When toluene or xylene having 8 or less atoms other than hydrogen atom was used, the result of the discharge performance was found to be poor.

In the case of the dispersion medium having the boiling point of less than 165°C, the result of the de-cap performance was found to be slightly poor. Further, when the dispersant with the boiling point of 190°C or higher was used, the result of the drying performance was found to be slightly poor.

It was also found that, even when the composition is the same, the ionic conductivity tends to become larger as the particle diameter becomes larger.

Aspects of the present invention are as follows.

### Aspect 1

A liquid composition including a solid electrolyte and a dispersion medium, the dispersion medium comprising a ring-containing hydrocarbon or phenyl ether, each having 9 or more atoms other than hydrogen atom.

### Aspect 2

The liquid composition described in the above Aspect 1, in which the dispersion medium is the ring-containing hydrocarbon having 9 or more atoms other than hydrogen atom.

### Aspect 3

The liquid composition described in the above Aspect 1, in which the dispersion medium is the phenyl ether having 9 or more atoms other than hydrogen atom.

### Aspect 4

The liquid composition described in any of the above Aspects 1 to 3, in which the dispersion medium has 10 or less atoms other than hydrogen atom.

### Aspect 5

The liquid composition described in the above Aspect 2, in which the ring contained in the dispersion medium is an aromatic ring.

### Aspect 6

The liquid composition described in any of the above Aspects 1 to 5, in which the dispersion medium has a boiling point of 165°C or higher.

### Aspect 7

The liquid composition described in any of the above Aspects 1 to 6, in which a content of the solid electrolyte in the liquid composition is 50% by mass or less.

### Aspect 8

The liquid composition described in any of the above Aspects 1 to 7, in which a content of the dispersion medium in the liquid composition is 40% by mass or more.

### Aspect 9

The liquid composition described in any of the above Aspects 1 to 8, further including a binder.

### Aspect 10

The liquid composition described in any of the above Aspects 1 to 9, further including a dispersant having an ionic adsorption group.

### Aspect 11

The liquid composition described in any of the above Aspects 1 to 10, in which the liquid composition is an inkjet ink composition.

### Aspect 12

The liquid composition described in any of the above Aspects 1 to 11, in which the solid electrolyte has a mode diameter of 1.8 µm or more.

### Aspect 13

A storage container storing the liquid composition described in any of the above Aspects 1 to 12.

### Aspect 14

An apparatus for producing a solid-electrolyte-containing layer, including the storage container described in the above Aspect 13, and a discharge unit that discharges the liquid composition stored in the storage container using an inkjet head.

### Aspect 15

A method for producing a solid-electrolyte-containing layer, including discharging the liquid composition described in any of the above Aspects 1 to 12 using an inkjet head.

### Aspect 16

A method for producing an electrochemical element, including forming a solid-electrolyte-containing layer by the method described in the above Aspect 15.

### Aspect 17

The method described in the above Aspect 16, in which the electrochemical element is a secondary battery.

According to the liquid composition described in any of the above Aspects 1 to 12, the storage container described in the above Aspect 13, the apparatus for producing a solid-electrolyte-containing layer described in the above Aspect 14, the method for producing a solid-electrolyte-containing layer described in the above Aspect 15, or the method for producing an electrochemical element described in the above Aspect 16 or 17, the object of the present invention can be achieved by solving the various conventional problems.

Any one of the above-described operations may be performed in various other ways, for example, in an order different from the one described above.

## Claims

1. A liquid composition comprising:
a solid electrolyte; and
a dispersion medium,
the dispersion medium comprising a ring-containing hydrocarbon or phenyl ether, each having 9 or more atoms other than hydrogen atom.

2. The liquid composition according to claim 1, wherein the dispersion medium is the ring-containing hydrocarbon having 9 or more atoms other than hydrogen atom.

3. The liquid composition according to claim 1, wherein the dispersion medium is the phenyl ether having 9 or more atoms other than hydrogen atom.

4. The liquid composition according to any of claims 1 to 3, wherein the dispersion medium has 10 or less atoms other than hydrogen atom.

5. The liquid composition according to claim 2, wherein the ring contained in the dispersion medium is an aromatic ring.

6. The liquid composition according to any of claims 1 to 5, wherein the dispersion medium has a boiling point of 165°C or higher.

7. The liquid composition according to any of claims 1 to 6, wherein a content of the solid electrolyte in the liquid composition is 50% by mass or less.

8. The liquid composition according to any of claims 1 to 7, wherein a content of the dispersion medium in the liquid composition is 40% by mass or more.

9. The liquid composition according to any of claims 1 to 8, further comprising a binder.

10. The liquid composition according to any of claims 1 to 9, further comprising a dispersant having an ionic adsorption group.

11. The liquid composition according to any of claims 1 to 10, wherein the liquid composition is an inkjet ink composition.

12. The liquid composition according to any of claims 1 to 11, wherein the solid electrolyte has a mode diameter of 1.8 µm or more.

13. A method for producing a solid-electrolyte-containing layer, comprising discharging the liquid composition according to any of claims 1 to 12 using an inkjet head.

14. A method for producing an electrochemical element, comprising forming a solid-electrolyte-containing layer by the method according to claim 13.

15. The method according to claim 14, wherein the electrochemical element is a secondary battery.
